# EUROPEAN PATENT SPECIFICATION

(11) **EP 1 597 113 B1**
(45) Date of publication and mention of the grant of the patent: **21.06.2006**
(21) Application number: 04712601.6
(22) Date of filing: 19.02.2004
(51) Int. Cl.: B60R 5/04

(54) **PARCEL SHELF SUPPORT**
ABLAGEFACHTRÄGER
SUPPORT DE PLAGE ARRIERE

(30) Priority: 19.02.2003 GB 0303791
(43) Date of publication of application: 23.11.2005
(73) Proprietor: Nissan Technical Centre Europe Ltd, Bedfordshire MK43 0DB (GB)
(72) Inventor: NEALE, Brian, Bedfordshire MK43 0DB (GB); WAKEFIELD, Richard, Bedfordshire MK43 0DB (GB)
(74) Representative: Holmes, Matthew William
(86) International application number: PCT/GB2004/000624
(87) International publication number: WO 2004/074044

(56) References cited:
- WO-A-99/42689
- DE-A- 19 723 838
- US-A- 5 970 884
- US-B1- 6 394 002
- US-B1- 6 508 499

## Description

The present invention relates to a parcel shelf support and particularly, but not exclusively, to an arrangement or apparatus for pivotably supporting a parcel shelf of a vehicle. An apparatus according to the preamble of claim 1 is known from US-B-6394002B.

It is known to provide automobiles or other vehicles, and in particular those vehicles commonly known as "hatchbacks", with a rigid or semi-rigid cover extending over the luggage area or compartment (also commonly referred to as the "boot" or "trunk") of the vehicle between a rear bench or seat and the rear hatch door or tailgate. Such covers are commonly known as parcel shelves.

Parcel shelves of this type are often pivotally mounted within the vehicle and are arranged to pivot upwardly when the rear hatch door is opened thereby to facilitate access to the luggage compartment. Frequently, the pivoting movement of the parcel shelf corresponds substantially to that of the tailgate itself.

It is known to mount the parcel shelf in the vehicle by means of a substantially U-shaped clip which is located, in an inverted orientation, to a downwardly-extending side wall of the parcel shelf and whose shape defines a recess for engagement with a horizontally directed shaft or spigot. The spigot conventionally extends laterally from an interior trim panel of the luggage compartment and engages with the clip such that the clip, and hence the parcel shelf itself, is able to rotate or pivot about the spigot.

An upper surface of the parcel shelf is connected to the inside of the tailgate by means of ties or strings extending therebetween. As the tailgate is opened and pivoted upwardly, the parcel shelf, being connected thereto via the strings or ties, also pivots upwardly about the spigots, providing good access to the luggage compartment. Clearly, the parcel shelf remains in the pivoted position for as long as the tailgate remains open.

A disadvantage of this arrangement is that the connecting strings or ties between the parcel shelf and the tailgate are relatively expensive to manufacture and represent a significant proportion of the total cost of the parcel shelf.

It has been proposed to forego the connecting strings or ties in order to reduce costs. However, such an arrangement conventionally does not permit the parcel shelf to remain in a pivoted position without manual support. It is also a problem to be considered that a parcel shelf can be a relatively large and heavy item, so that any means for supporting the shelf in a pivoted position must be capable of providing a relatively large supporting force.

It would be advantageous to provide an arrangement which permits the parcel shelf to be moved to a pivoted position, and maintained there without manual support, without the use of connecting strings or ties. It is an aim of the present invention to address this problem.

According to the present invention therefore, there is provided an apparatus for supporting a vehicle parcel shelf according to claim 1, the apparatus comprising a clip member engageable with a pivot member for pivoting movement relative thereto between a first position, corresponding to a substantially horizontal position of the parcel shelf, and a second position, corresponding to an inclined position of the parcel shelf, the clip member having catch means arranged for engagement with latch means disposed on the pivot member when the clip is in the second position.

The clip member is be provided with an opening, in the form of an open channel, for engagement with the pivot member such that the clip member partially surrounds the pivot member. For example, the clip member may be substantially U-shaped or C-shaped (alternatively "Omega-shaped), defining a channel or recess for engagement of the pivot member therewith. Alternatively, the clip member may be substantially any other shape but having an aperture extending therethrough for engagement of the pivot member therein.

Said channel defines an internal perimeter wall of the clip member and wherein the catch means comprises at least one groove disposed in said perimeter wall. The internal perimeter wall is provided with at least one resilient shoulder which, in use, serves to prevent disengagement of the pivot member from the channel to hold the parcel shelf in the inclined position, unless a relatively high manual and/or other external force being applied thereto.

The or each resilient shoulder may have a first, free end portion, whilst a second end portion is cantilever-mounted upon the perimeter wall of the channel. Alternatively, the or each resilient shoulder forms an integral part of the internal perimeter wall of the channel.

In one embodiment, the clip member is located on the parcel shelf and the pivot member is located on a fixed part of the vehicle. In an alternative embodiment, the pivot member is located on the parcel shelf and the clip member is located on a fixed part of the vehicle.

The pivot member may comprise a generally cylindrical shaft or spigot configured for engagement with or within the recess or aperture.

The latch means may comprise a raised portion or rib provided on an outer surface of the shaft or spigot. The rib may project radially outwardly from the surface of the shaft or spigot and may extend longitudinally therealong. Preferably, the rib is generally downwardly directed, in use. More preferably, the rib is inclined slightly from the downward vertical. The inclination may be between approximately 1° and 30° and preferably between approximately 5° and 20°. However any suitable orientation of the rib may be used.

The catch means may comprise a groove, recess or detent disposed in a perimeter wall of the opening. The wall may be provided with at least one resilient shoulder for retaining the pivot member in or within the opening or aperture whilst permitting relative movement therebetween.

Advantageously, in use and in a first, substantially horizontal position of the parcel shelf, the pivot member is engaged with the clip member but the latch means is not yet engaged with the catch means. The parcel shelf may then be pivoted from the first position to a second, inclined position whereby the latch means engages with the catch means, substantially hindering or preventing further pivotal movement and thereby retaining the parcel shelf in the inclined position without the need for additional support such as strings or ties. The frictional or retaining force provided by the latch/catch arrangement is sufficient to retain the parcel shelf in the inclined position but can be overcome with a reasonable manual force to return the parcel shelf to the horizontal position.

In an alternative embodiment, where the opening takes the form of a closed aperture defining an internal perimeter wall of the clip member, again the catch means may include at least one groove disposed in the internal perimeter wall.

The aperture may be of generally oval shape and at least a portion of the internal perimeter wall may be flexible to permit relative rotational movement of the clip member and the pivot member. In an alternative embodiment, the opening may be of generally circular shape.

In a further alternative embodiment, the pivot member may be provided with a spring-loaded raised portion or rib.

The present invention advantageously provides an arrangement which permits a vehicle parcel shelf to be retained in an inclined position without the use of expensive strings or ties.

The present invention also provides a parcel shelf incorporating the above-described apparatus and a vehicle incorporating such an apparatus or a parcel shelf.

The present invention will now be described, by way of example only, with reference to the accompanying drawings in which:
Figure 1 illustrates a front view of a preferred form of clip according to the invention;
Figure 2 is a perspective view of the clip of Figure 1;
Figure 3 is a plan view of the clip of Figure 1;
Figure 4 is a rear view of the clip of Figure 1;
Figure 5 is a cross-sectional view of a preferred form of pivot means according to the invention;
Figure 6 is an underside view of the apparatus, in use;
Figures 7a and 7b illustrate operation of the apparatus;
Figure 8 illustrates an alternative form of clip not being part of the invention; and
Figure 9 illustrates a further alternative form of clip according to the invention.

In the following description, like reference numerals indicate like parts. Furthermore, the Figures are not necessarily drawn to scale, nor are they necessarily illustrated in the correct orientation for use.

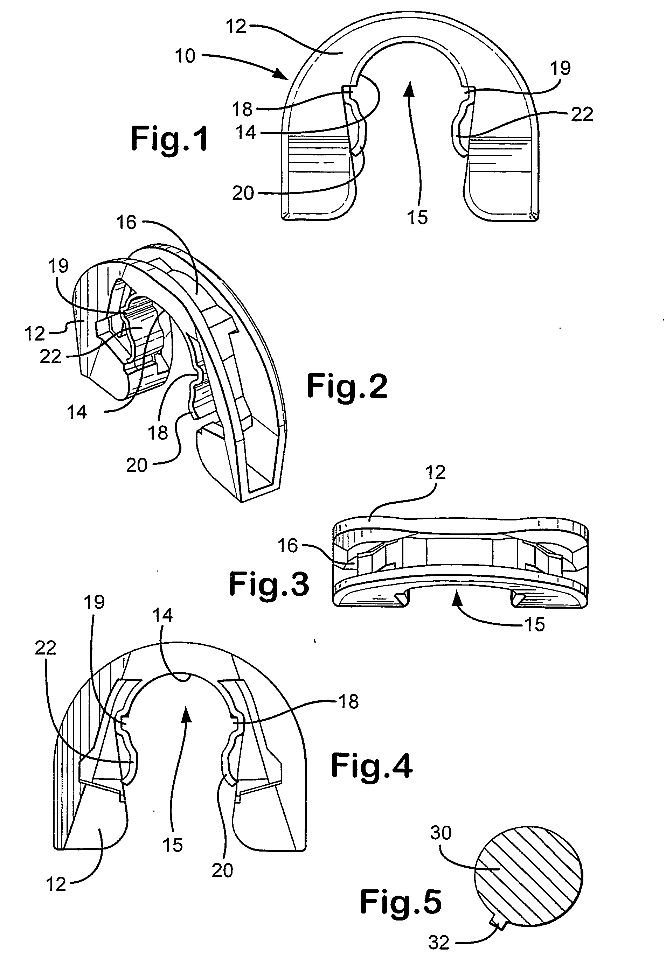

Referring to Figures 1 to 6, these together illustrate a preferred form of apparatus according to the invention. Considering initially Figures 1 to 4, the apparatus comprises a clip member 10 having a substantially U-shaped body portion 12 and a curvilinear wall portion 14. The body portion 12 and the wall portion 14 together define an opening in the form of a channel or recess 15 having an open mouth. In the illustrated embodiment, the body portion 12 features an outer circumferential groove 16 for engagement in and with a correspondingly-shaped recess formed in a side wall of a parcel shelf (not shown). It will be understood that such a groove is not essential.

The wall portion 14, which is preferably integrally formed with the body portion 12, generally follows the inner perimeter of the body portion 12 and is therefore also substantially U-shaped. However, the wall portion 14 is provided with catch means in the form of two, spaced grooves or recesses 18, 19, the purpose of which is described below.

In the illustrated embodiment, the wall portion 14 includes first and second resilient shoulders 20, 22 in the form of two generally opposing, inwardly directed regions of the wall portion 14 which diverge from the inner perimeter of the body portion 12. The shoulders 20, 22 together define a restriction or narrowing in the channel 15. However, the shoulders are both relatively flexible and resilient.

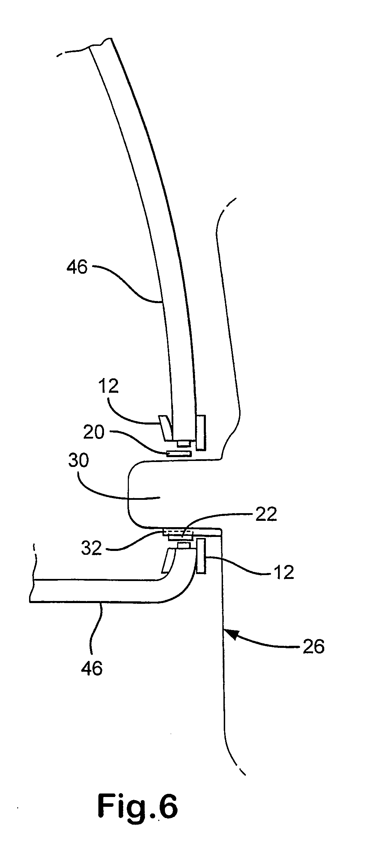

Referring now to Figure 5, this is a cross-sectional view of a preferred form of pivot means for use with the apparatus of the invention. The pivot means comprises a relatively short, generally cylindrical shaft or spigot 30 which, in use, extends generally horizontally from an interior trim panel of the luggage compartment of the vehicle (Figure 6, numeral 26). The position, orientation and purpose of such a spigot will be well understood by the skilled person.

However, in contrast with conventional spigots, the spigot 30 of Figure 5 is provided with latch means in the form of an embossed or upstanding rib 32 which extends partially or fully along the length of the spigot 30. The rib 32 is preferably integrally formed with the spigot 30 but can be formed as a separate entity and then connected thereto. In use, the rib 32 projects generally downwardly from the spigot 30 but at an angle of approximately five to 20 degrees from the vertical. It will be understood that the direction in which the rib 32 extends is not critical although it may be advantageous for the rib to be sufficiently long to permit latching across the full width of the clip member.

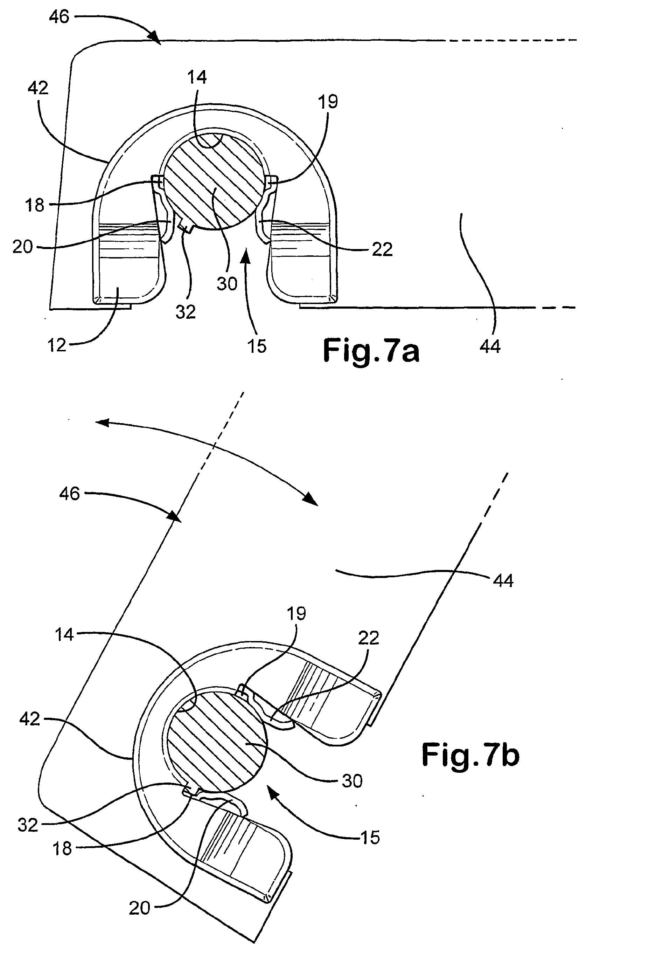

Referring now to Figures 6, 7a and 7b, these illustrate, respectively, an underside sectional view of the apparatus *in situ* and the subsequent operation thereof. As described above, the clip member 10 is located in an appropriately shaped recess 42 disposed in a side wall 44 of a vehicle parcel shelf 46.

In use, the parcel shelf is positioned, in a conventional manner, over the load space of the luggage compartment of the vehicle such that the spigot 30 enters, and engages in, the channel 15 of the clip member 10. The shoulders 20, 22, are flexible to enable the spigot 30 to move past the narrowing in the channel 15 and are resilient such that they return to the narrowed position when the spigot 30 is fully seated in the recess 15. The shoulders 20, 22 prevent the spigot 30 disengaging from the clip 10 unless a relatively high manual or other external force is applied.

In a first, substantially horizontal position of the parcel shelf 46 (Figure 7a), the spigot 30 is fully seated in the recess 15 of the clip 10, thereby supporting the parcel shelf 46. When the parcel shelf 46 is required to be pivoted upwardly in order, for example, to provide access to the luggage compartment of the vehicle, the user manually lifts the parcel shelf so that it, and hence the clip member 10, pivots or rotates relative to the spigot 30.

As the parcel shelf 46 rotates, the rib 32 on the spigot 30 contacts the shoulder 20 of the clip 10. The shoulder 20 flexes sufficiently to enable the rib to move past the shoulder until, at a predetermined angle of inclination of the parcel shelf 46, the rib 32 engages in the recess or groove 18. The shape of the recess or groove 18, that of the rib 32 and the resilience of the shoulder 20 are such that a frictional retaining force is generated between the clip member 10 and the spigot 30 which is sufficient to maintain the parcel shelf 46 in the inclined position even when it is released by the user. No strings, ties or other supports are required to retain the parcel shelf in the inclined position.

To return the parcel shelf 46 to the first position, the user exerts a downwardly directed force on the parcel shelf which is sufficient to overcome the frictional force present between the clip member 10 and the spigot 30. Thus, the rib 32 rides out of the recess 18, past the resilient shoulder 20, and the parcel shelf 46 is pivoted or rotated back to the first, substantially horizontal position.

It will be understood that the direction in which the rib 32 extends from the spigot 30, and the position of the recess 18 in the wall portion 14, together determine the maximum angle of rotation of the clip member 10 relative to the spigot 30, and hence the maximum angle of rotation of the parcel shelf 46. In the illustrated embodiment, the position of the recess 18 and the inclination of the rib 32 from the downwardly vertical permits a maximum angle of rotation of the parcel shelf which is less than 90° and, in practice is between 70° and 85°.

However, it will be appreciated that a greater angle of rotation can be permitted by moving the position of the recess 18 clockwise (in the drawing), by moving the position of the rib 32 anticlockwise, or both. Conversely, a lesser angle of rotation can be permitted by moving the position of the recess 18 anticlockwise, by moving the position of the rib 32 clockwise, or both.

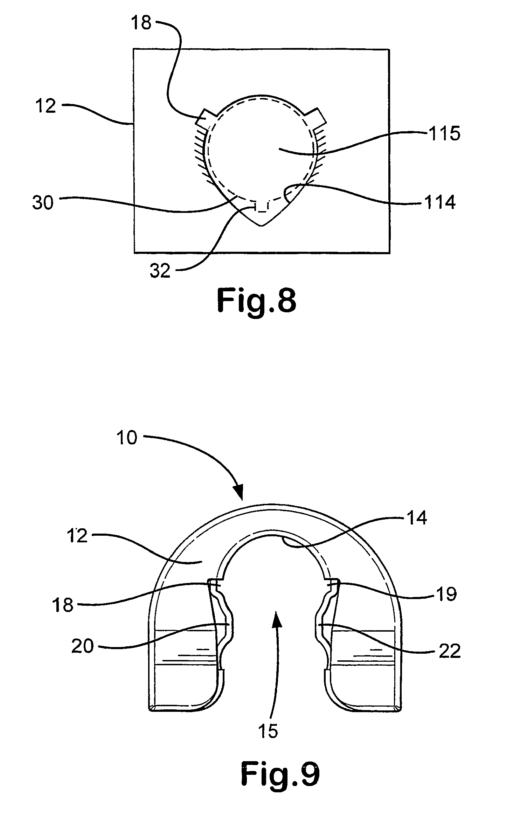

Figure 8 illustrates an alternative form of clip member 10 not being part of the invention. It will be appreciated that, in the above described embodiment, the U-shape of the clip member 10 permits the complete disengaging of the spigot 30 therefrom so that the parcel shelf can be removed from the vehicle and then replaced, if desired.

In some instances, it may not be necessary for the parcel shelf to be removable from the vehicle, but only to be pivoted between the horizontal and inclined positions. Here, the opening in the clip member need not define an open channel, but instead the opening takes the form of an enclosed aperture (or a closed channel). In this case, the shape of the clip member is not essential and a shape other than a U-shape or C-shape can be adopted for the clip member 10.

In Figure 8, the clip member is shown having a substantially square shaped body portion 12 with a generally oval aperture 115 extending therethrough. Again, the internal wall portion 114, defining the aperture 115, is provided with first and second recesses or grooves 18, 19 for location of the rib 32 therein.

In this case, it may not be necessary to provide the shoulders 20, 22 since the spigot is not able to disengage from the clip. However, the hatched region of the wall portion 114 must be sufficiently flexible and/or resilient to allow relative rotational movement of the clip member 10 and the spigot 30 despite the projecting rib 32. Indeed, if the hatched region of the wall portion 114 were sufficiently flexible or resilient, the aperture 115 could be made generally circular and still permit movement of the clip member 10 relative to the spigot.

Alternatively, a non-flexible wall portion could be employed defining a circular aperture. In this embodiment (not shown), the spigot 30 could be provided with a rib 32 which extends from the spigot by varying amounts under the influence of a spring or similar. Such a spring-loaded rib would lie substantially flush with the surface of the spigot 30 when the latter is not aligned with the groove or recess 18 (i.e. when the parcel shelf is in the horizontal position and during rotation thereof) but would project from the surface to engage with the groove or recess 18 when aligned (i.e. in the inclined position of the parcel shelf).

It will be appreciated that, in practice, at least two clip members will usually be employed, one on each side of the parcel shelf 46, in order to support the parcel shelf from both sides. For this reason, the clip member 10 of the illustrated embodiments is provided with two spaced apart grooves 18, 19 so that the clip member can be reversed. In other words, the clip member 10 is bi-directional and identical clip members can be used, in reversed orientation, on opposite sides of the parcel shelf. This is particularly advantageous from a manufacturing point of view.

The clip member can be formed of any suitable material such as plastics or metal, provided that the required flexibility is provided where necessary, as described above. It will be appreciated that the wall portion 14 may be integrally formed with the body portion 12 of the clip member 10. It therefore follows that the wall portion 14 is not necessarily a separate feature of the clip member but, in many cases, will simply represent that portion of the clip member which defines the recess or aperture 15.

In the illustrated embodiment, the shoulders 20, 22 are cantilevered having a free end which provides the necessary flexibility. In another embodiment shown in Figure 9, the shoulders are not cantilevered, continuing integrally with the wall portion 14, and the necessary flexibility is provided by the flexibility of the material from which the clip member is fabricated.

Whilst the above description refers only to the clip member 10 being attached to the parcel shelf 46 and the spigot 30 being connected to the vehicle trim panel 26, it is equally advantageous to have the clip member 10 located on or in the trim panel 26 of the vehicle and the spigot 30 project from the side walls 44 of the parcel shelf 46.

The rib 32 may be of any suitable shape and need only be of a length sufficient for proper engagement in the recesses 18, 19.

It will be appreciated that the present invention provides a particularly simple and effective solution to the problem of retaining a vehicle parcel shelf in an inclined position without the requirement for expensive strings or ties.

## Claims

1. An apparatus for supporting a vehicle parcel shelf (46), the apparatus comprising a clip member (10) engageable with a pivot member (30) for pivoting movement relative thereto between a first position, corresponding to a substantially horizontal position of the parcel shelf (46), and a second position, corresponding to an inclined position of the parcel shelf (46), the clip member (10) having catch means (18, 19) arranged for engagement with latch means (32) disposed on the pivot member (30) in the second position wherein (i) the clip member (10) defines an opening (15) for engagement with the pivot member (30), whereby the opening (15) is shaped so that the clip member (10) partially or wholly surrounds the pivot member (30); (ii) the opening takes the form of a channel (15) defining an internal perimeter wall (14) of the clip member (10) and wherein the catch means comprises at least one groove (18, 19) disposed in said perimeter wall (14); (iii) the internal perimeter wall (14) is provided with at least one resilient shoulder (20, 22) which, in use, serves to prevent disengagement of the pivot member (30) from the channel (15) to hold the parcel shelf (46) in the inclined position, in the absence of a relatively high manual and/or other external force being applied thereto, **characterized in that** (iv) the or each resilient shoulder (20, 22) has a first, free end portion and a second end portion which is cantilever-mounted upon the internal perimeter wall (14) of the channel (15).

2. An apparatus as claimed in claim 1, wherein the clip member (10) is connectable with the parcel shelf (46) and the pivot member (30) is connectable with a fixed part of the vehicle (26).

3. An apparatus as claimed in claim 1, wherein the pivot member (30) is connectable with the parcel shelf (46) and the clip member (10) is connectable with a fixed part of the vehicle (26).

4. An apparatus as claimed in any preceding claim, wherein the pivot member comprises a shaft or spigot (30).

5. An apparatus as claimed in claim 4, wherein the latch means comprises a raised portion or rib (32) extending from the shaft or spigot (30).

6. An apparatus as claimed in claim 5, wherein the raised portion or rib (32) extends longitudinally along the shaft or spigot (30).

7. An apparatus as claimed in claim 1, wherein the or each resilient shoulder (20, 22) forms an integral part of the internal perimeter wall (14) of the channel (15).

8. A parcel shelf (46) having an apparatus as claimed in any one of the preceding claims.

9. A parcel shelf (46) as claimed in claim 8, having a first apparatus having a first clip member (10) engageable with a first pivot member (30) and a second apparatus having a second clip member (10) engageable with a second pivot member (30), wherein the first pivot member (30) and the first clip member (10) are located on one side of the parcel shelf (46) and the second pivot member (30) and the second clip member (10) are located on the other side of the parcel shelf in order to support the parcel shelf (46) on both sides of the vehicle.

10. A vehicle having an apparatus or parcel shelf (46) as claimed in any one of the preceding claims.

## Patentansprüche

1. Vorrichtung zum Tragen eines Fahrzeugablagefachs (46), wobei die Vorrichtung folgendes umfaßt: ein Clipelement (10), das mit einem Schwenkelement (30) in Eingriff gebracht werden kann für eine Schwenkbewegung relativ dazu zwischen einer ersten Position entsprechend einer im wesentlichen horizontalen Position des Ablagefachs (46) und einer zweiten Position entsprechend einer geneigten Position des Ablagefachs (46), wobei das Clipelement (10) Arretierungsmittel (18, 19) aufweist, die ausgelegt sind für eine Ineingriffnahme mit am Schwenkelement (30) angeordneten Klinkenmitteln (32) in der zweiten Position, wobei (i) das Clipelement (10) eine Öffnung (15) zur Ineingriffnahme mit dem Schwenkelement (30) definiert, wodurch die Öffnung (15) so geformt ist, daß das Clipelement (10) das Schwenkelement (30) ganz oder teilweise umgibt; (ii) die Öffnung die Form eines Kanals (15) annimmt, der eine Innenumfangswand (14) des Clipelements (10) definiert, und wobei das Arretierungsmittel mindestens eine in der Umfangswand (14) angeordnete Nut (18, 19) umfaßt; (iii) die Innenumfangswand (14) mit mindestens einer nachgiebigen Schulter (20, 22) versehen ist, die bei Gebrauch dazu dient, ein Lösen des Schwenkelements (30) von dem Kanal (15) zu verhindern, um das Ablagefach (46) in der geneigten Position zu halten, wenn darauf keine relativ hohe manuelle und/oder andere externe Kraft ausgeübt wird, **dadurch gekennzeichnet, daß** (iv) die oder jede nachgiebige Schulter (20, 22) einen ersten, freien Endabschnitt und einen zweiten Endabschnitt, der einseitig an der Innenumfangswand (14) des Kanals (15) eingespannt ist, aufweist.

2. Vorrichtung nach Anspruch 1, wobei das Clipelement (10) mit dem Ablagefach (46) verbunden werden kann und das Schwenkelement (30) mit einem feststehenden Teil des Fahrzeugs (26) verbunden werden kann.

3. Vorrichtung nach Anspruch 1, wobei das Schwenkelement (30) mit dem Ablagefach (46) verbunden werden kann und das Clipelement (10) mit einem feststehenden Teil des Fahrzeugs (26) verbunden werden kann.

4. Vorrichtung nach einem der vorhergehenden Ansprüche, wobei das Schwenkelement eine Welle oder einen Zapfen (30) umfaßt.

5. Vorrichtung nach Anspruch 4, wobei das Klinkenmittel einen erhöhten Abschnitt oder eine Rippe (32) umfaßt, der beziehungsweise die sich von der Welle oder dem Zapfen (30) aus erstreckt.

6. Vorrichtung nach Anspruch 5, wobei der erhöhte Abschnitt oder die Rippe (32) sich in Längsrichtung entlang der Welle oder des Zapfens (30) erstreckt.

7. Vorrichtung nach Anspruch 1, wobei die oder jede nachgiebige Schulter (20, 22) einen integralen Teil der Innenumfangswand (14) des Kanals (15) bildet.

8. Ablagefach (46) mit einer Vorrichtung wie in einem der vorhergehenden Ansprüche beansprucht.

9. Ablagefach (46) nach Anspruch 8 mit einer ersten Vorrichtung mit einem ersten Clipelement (10), das mit einem ersten Schwenkelement (30) in Eingriff gebracht werden kann, und einer zweiten Vorrichtung mit einem zweiten Clipelement (10), das mit einem zweiten Schwenkelement (30) in Eingriff gebracht werden kann, wobei sich das erste Schwenkelement (30) und das erste Clipelement (10) auf einer Seite des Ablagefachs (46) befinden und sich das zweite Schwenkelement (30) und das zweite Clipelement (10) auf der anderen Seite des Ablagefachs befinden, damit das Ablagefach (46) auf beiden Seiten des Fahrzeugs getragen wird.

10. Fahrzeug mit einer Vorrichtung oder einem Ablagefach (46) nach einem der vorhergehenden Ansprüche.

## Revendications

1. Appareil pour supporter une plage arrière de véhicule (46), appareil qui comprend un organe de pince (10) pouvant se mettre en prise avec un organe pivot (30) pour un mouvement pivotant relatif à celui-ci entre une première position, correspondant à une position sensiblement horizontale de la plage arrière (46), et une deuxième position, correspondant à une position inclinée de la plage arrière (46), l'organe de pince (10) étant pourvu d'un moyen d'accrochage (18, 19) disposé pour se mettre en prise avec le moyen d'encliquetage (32) disposé sur l'organe pivot (30) dans la deuxième position, selon lequel (i) l'organe de pince (10) définit une ouverture (15) pour se mettre en prise avec l'organe pivot (30), selon lequel l'ouverture (15) a une forme telle que l'organe de pince (10) entoure partiellement ou totalement l'organe pivot (30) ; (ii) l'ouverture prend la forme d'un chenal (15) définissant une paroi périphérique interne (14) de l'organe de pince (10) et selon lequel le moyen d'accrochage comprend au moins une rainure (18, 19) disposée dans ladite paroi périphérique (14) ; (iii) la paroi périphérique interne (14) est prévue avec au moins un épaulement résilient (20, 22) qui, en utilisation, sert à empêcher le désengagement de l'organe pivot (30) depuis le chenal (15) pour maintenir la plage arrière (46) dans la position inclinée, en l'absence d'une force manuelle et/ou d'une autre force extérieure relativement élevée y étant appliquée, **caractérisé en ce que** (iv) l'épaulement ou chaque épaulement résilient (20, 22) a une première portion d'extrémité libre et une deuxième portion d'extrémité montée en porte-à-faux sur la paroi périphérique interne (14) du chenal (15).

2. Appareil selon la revendication 1, selon lequel l'organe de pince (10) peut être relié à la plage arrière (46) et l'organe pivot (30) peut être relié à une partie fixe du véhicule (26).

3. Appareil selon la revendication 1, selon lequel l'organe pivot (30) peut être relié à la plage arrière (46) et l'organe de pince (10) peut être relié à une partie fixe du véhicule (26).

4. Appareil selon l'une quelconque des revendications précédentes, selon lequel l'organe pivot comprend un arbre ou doigt (30).

5. Appareil selon la revendication 4, selon lequel le moyen d'encliquetage comprend une portion surélevée ou nervure (32) qui s'étend depuis l'arbre ou le doigt (30).

6. Appareil selon la revendication 5, selon lequel la portion surélevée ou nervure (32) s'étend longitudinalement sur l'arbre ou le doigt (30).

7. Appareil selon la revendication 1, selon lequel l'épaulement ou chaque épaulement résilient (20, 22) forme intégralement partie de la paroi périphérique interne (14) du chenal (15).

8. Plage arrière (46) munie d'un appareil selon l'une quelconque des revendications précédentes.

9. Plage arrière (46) selon la revendication 8, munie d'un premier appareil possédant un premier organe de pince (10) pouvant se mettre en prise avec un premier organe pivot (30) et un deuxième appareil possédant un organe de pince (10) pouvant se mettre en prise avec un deuxième organe pivot (30), selon laquelle le premier organe pivot (30) et le premier organe de pince (10) sont situés sur un côté de la plage arrière (46) et le deuxième organe pivot (30) et le deuxième organe de pince (10) sont situés sur l'autre côté de la plage arrière afin de supporter la plage arrière (46) des deux côtés du véhicule.

10. Véhicule muni d'un appareil ou d'une plage arrière (46) selon l'une quelconque des revendications précédentes.
